# EUROPEAN PATENT SPECIFICATION

(11) **EP 1 917 445 B1**
(45) Date of publication and mention of the grant of the patent: **03.06.2009**
(21) Application number: 06769459.6
(22) Date of filing: 07.08.2006
(51) Int. Cl.: F15B 15/20, F16D 25/12

(54) **PNEUMATIC INSTALLATION OF CYLINDER (PIC)**
DRUCKLUFTINSTALLATION EINES ZYLINDERS
INSTALLATION PNEUMATIQUE DE CYLINDRE (PIC)

(30) Priority: 24.08.2005 SE 0501882
(43) Date of publication of application: 07.05.2008
(73) Proprietor: Kongsberg Automotive AS, 3602 Kongsberg (NO)
(72) Inventor: GUNNERUD, Morten, Berger, N-3614 Kongsberg (NO); LÉNÉRAND, Lucien, N-3610 Kongsberg (NO)
(74) Representative: UEXKÜLL & STOLBERG
(86) International application number: PCT/NO2006/000292
(87) International publication number: WO 2007/024137

(56) References cited:
- EP-A2- 0 273 701
- GB-A- 2 088 010
- GB-A- 2 099 102
- US-A- 5 295 566

## Description

The invention concerns a system for mounting and/or demounting a cylinder unit in a vehicle, and methods for mounting/demounting a cylinder unit provided in a element which is removably arranged in a vehicle.

When mounting a cylinder unit with a protruding piston rod in accordance with prior art, the rod is manually retracted into the cylinder unit and locked by inserting a holding device such as for instance a stick or a shaft. The holding device keeps the piston rod in place in a retracted position in order to fit the cylinder unit into mounting position. The holding device is thereafter removed in order to release the piston rod to an initial position ready to be operated.

US 5295566 shows a solution demanding a mechanical holding device to be used during installation of a cylinder unit with a protruding piston rod.

The solution in accordance with prior art includes the use of a specific mechanical tool for installation purposes. Furthermore, when installing the cylinder unit, the assembler must physically operate the retraction of the piston rod. Consequently, the installation procedure in accordance with prior art is quite cumbersome and not very efficient. However, a more significant restriction is the fact that the prior art solution is not applicable for dismounting the cylinder. This known solution is merely suitable when installing the cylinder unit and does not suggest a procedure for demounting the cylinder unit in the case of maintenance or replacement of the cylinder unit.

GB-A-2 088 010 discloses a system according to the preamble of claim 1 and a method according to the preamble of claim 15. This document in particular discloses a system for mounting/demounting a cylinder unit in a vehicle, wherein a piston rod provided with a piston is arranged in the bore of the cylinder unit, which piston and piston rod are displaceably arranged in the axial direction of the bore of the cylinder unit, the bore has an opening provided for an end portion of the piston rod to protrude out from the bore, and the piston separates the cylinder unit into a first chamber and a second chamber, wherein at least a first passage is provided for communication of fluid into or out of the first chamber. A lokking ring is initially accommodated in a shallow groove in a support to retain the assembly in a contracted state to facilitate installation.

It is an object of the invention to provide a solution where there is basically no need for the assembler to interfere physically with the protruding piston rod of cylinder unit.

The object of the invention is obtained by the invention as defined in the independent claims 1 and 15 wherein embodiments of the invention is presented in the proceeding dependent claims.

The invention in accordance with independent claim 1 comprises a system for mounting and/or demounting a cylinder unit in/from a vehicle. A piston rod provided with a piston is arranged in the bore of the cylinder unit. The piston and piston rod are arranged to be displaced in the axial direction of the bore of the cylinder unit. The bore has an opening provided for an end portion of the piston rod to protrude out from the bore. The piston separates the cylinder unit into a first chamber and a second chamber wherein at least a first passage is provided for communication of fluid into or out of the first chamber. In an initial position where the cylinder unit is prepared to be operated, the piston and the piston rod is positioned so that the end portion of the piston rod protrudes out from the mouth of the bore. When preparing the cylinder unit to be mounted into a structure of the vehicle or demounted from the structure of the vehicle, pressurized fluid is introduced into the first chamber preferably through the first passage thereby placing the piston and the piston rod in a mounting/demounting position. In this position the end portion of the piston rod is essentially retracted in the bore. By this arrangement the cylinder unit may easily be mounted into or demounted from the structure of the vehicle.

The pressurized fluid utilized to bring the piston and the piston rod in a mounting/demounting position may be hydraulic or pneumatic, preferably a pneumatic source will be used for the supply of pressurized fluid. Introduction of pressurized fluid into the first chamber causes the pressure in the first chamber to rise, thereby moving the piston and the piston rod away from the mouth of the bore and further into the bore to retract the end portion of the piston rod.

The first chamber may be provided with some kind of outlet for letting excessive fluid out of the first chamber, when the piston and piston rod are returning to initial position. The first passage may function as an outlet and may in one embodiment may be provided with a mouth communicating with the atmosphere. Further the first passage may be provided with an exhaust cap. Alternatively an exhaust chamber may provided for fluid vented out from the first chamber.

The pressurized fluid may be provided by an existing source present in the vehicle, such as the air source used for the braking system. Preferably a first valve is provided to control the communication of fluid from the existing source to the first passage.

Alternatively, the pressurized fluid may be provided by an external source which is arranged for connection to the first passage.

The system may be provided with a second valve to control the communication of fluid between first passage and atmosphere. The second valve may be used when pressurized fluid is provided by an external source. The second valve then opens and closes for the fluid entering the first chamber through the first passage. Further, regulating the pressure in the first chamber to place the piston rod in a mounting/dismounting may be carried out by means of the second valve. The second valve may be opened after completing the mounting/dismounting of the cylinder unit to vent out the first chamber and to bring piston and piston rod into an initial operating position.

For venting purposes the second valve may also be provided in a system using an existing source. Alternatively a two way valve may be provided to control the communication of fluid from the first passage to atmosphere and to control the communication of fluid from the existing source to the first passage.

The cylinder unit to be used in the system according to invention may be a slave cylinder, a clutch actuator, a gear actuator or any other device fitting in a vehicle.

The current invention also a includes method for mounting/demounting a cylinder unit included in an element which is removably arranged in a vehicle. In one embodiment this element is a shift-control unit which is removably arranged in a structure of the vehicle.

When carrying out the method for mounting/demounting using a source of pressurized fluid, the method comprises the steps of connecting an external source of pressurized fluid to the first passage and letting fluid into the first chamber. The first passage may be provided with a nipple for the connection of a tube pipelining between the first passage and the source. The inlet of fluid into the passage may be admitted by opening a second valve. After admitting access of fluid into the first chamber the pressure in the first chambers is regulated to place the piston and the piston rod in a position where the end portion of the piston rod is essentially retracted in the bore This regulation may be carried out by the second valve. When the end portion T is retracted in the bore, the element is ready to be inserted into or removed from the vehicle. Thereafter the pressure source is disconnected. The second valve may be used to stop fluid from entering the first chamber, before disconnecting the source from the nipple. After removing the pressure source the piston and the piston rod will return to initial operating positions and the excess fluid in the first chamber will be aired out, for instance by opening the second valve. The pressure source may be an external pressure source. When carrying out the method for mounting/demounting using an existing source of pressurized fluid, the method comprises the steps of introducing fluid into the first chamber from a source of pressurized fluid provided in the vehicle. The inlet of fluid into the passage may be admitted by opening a first valve. Thereafter the the pressure in the first chamber is regulated to place the piston and the piston rod in a position where the end portion is essentially retracted in the bore. This regulation may be carried out by a second valve. When the end portion of the piston rod is placed in the bore, the element is ready to be inserted into or removed from the structure of the vehicle. Thereafter the pressurized fluid is stopped from entering the first chamber, this might be carried out by closing the first valve.

The second valve, preferably providing communication between atmosphere and the first passage, may be brought to a closed position before introducing fluid into the first chamber. The second valve is held in a closed position during mounting/demounting of the element. After mounting/demounting the second valve may be opened to bring the piston rod into an intial operating position.

The invention will now be explained by an example with reference to the drawings, wherein
Fig. 1 shows a first embodiment of the invention in an installed position.
Fig. 2 shows a first embodiment of the invention in an installation position.
Fig. 3 shows a second embodiment of the invention in an installed position.

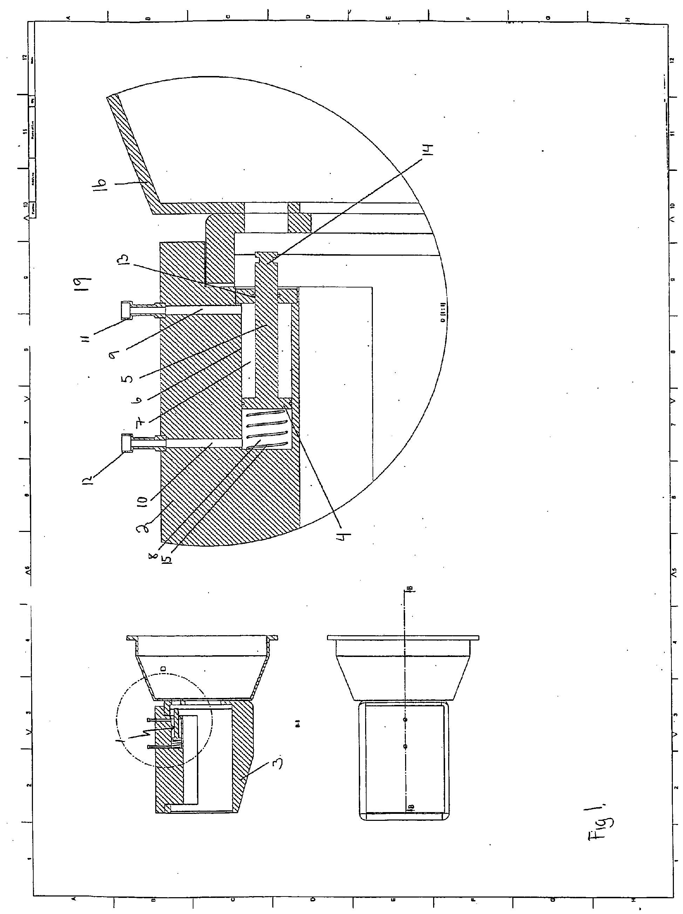

Fig 1 shows a cylinder unit 1 provided in an element such as a shift-control unit 2. The shift-control unit 2 as shown in Fig 1 is inserted into a gear box 3, and is provided for subsequently removal in the case of maintenance etc. The cylinder unit 1 comprises a piston 4 having an integrated piston rod 5. Alternatively the piston rod 5 and the piston 4 may provided as separate elements which are connected to each other. The piston 4 and the piston rod 5 is arranged to be moved in the axial direction of the bore 6 of the cylinder unit 1. The bore 6 has an opening 13 provided for an end portion 14 of the piston rod 5 to protrude out from the bore. The end portion 14 might be connected to a transfer rod (not shown) for operation of a clutch. (illustrated by a clutch housing 16). The piston 4 divides the bore 6 into a first chamber 7 and a second chamber 8, wherein a spring element 15 is arranged. A first passage 9 communicates with the first chamber 7 and a second passage 10 communicates with the second chamber 8. First and second passages 9, 10 are provided with first and second nipples 11, 12. Preferably first chamber 7 and first passage 9 constitute the pneumatic part of the cylinder unit 1, and second chamber 8 and second passage 9 constitute the hydraulic part of the cylinder unit 1. The piston 4 and the piston rod 5 is shown placed into an initial operating position, wherein the end portion of the piston rod is to be connected to a transfer rod preparing the system for the operation of the clutch.

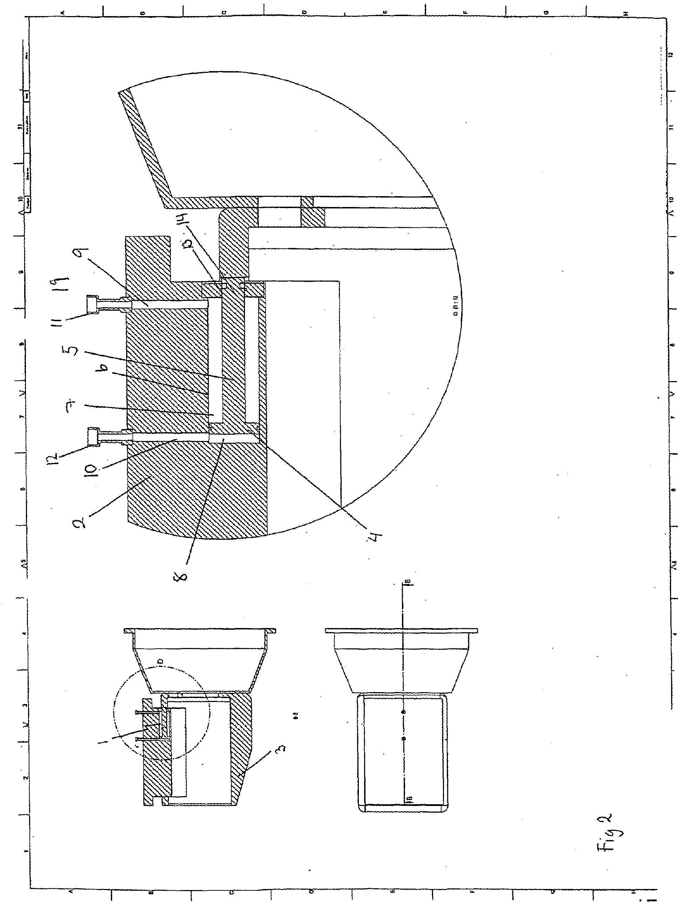

During installation or removing of the shift-control unit 2, as illustrated in fig 2 pressurized pneumatic fluid is led through the first passage 9 and into the first chamber 7, by connecting a source of pressurized fluid directly or indirectly to the nipple 11. The source of pressurized fluid may be an external source located outside the vehicle. By introducing pressurized fluid into the first chamber 7, the pressure in the first chamber 7 increases. The rise in pressure in the first chamber 7 causes the piston and the piston rod to move further into the bore 6 away from the opening 13 of the bore 6. Fig. 1 shows a situation wherein the piston rod is essentially retracted in the bore 6, thereby arranging for unobstructed insert or removal of the shift-control unit 2.

After the installation or removal of the shift-control unit 2 has been completed, the flow of fluid into the first chamber 1 is terminated by disconnecting the external source from the nipple 11. Due to the force of the spring element 15 or hydraulic fluid inserted into the first chamber 7, the piston 4 and piston rod 13 will return to the position as illustrated in fig 2. The pressurized fluid previously inserted into the first chamber 7, escapes through the first passage 9.

The first passage 9 may be provided with an exhaust cover. In one further embodiment of this first embodiment of the invention a valve-herein called a second valve-(not shown in the figure) may be provided in the first passage 9 to control the communication into and out of the first passage 9. The second valve may be used to control the amount of pressurized fluid entering and escaping from the first chamber 7 through the first passage 9. The second valve may be used to vent out the first chamber 7 to return the piston 4 and the piston rod 5 to the initial operating position in fig. 1. Alternatively the system may be arranged with an exhaust chamber (not shown) provided for the pressurized fluid escaping the first chamber 7.

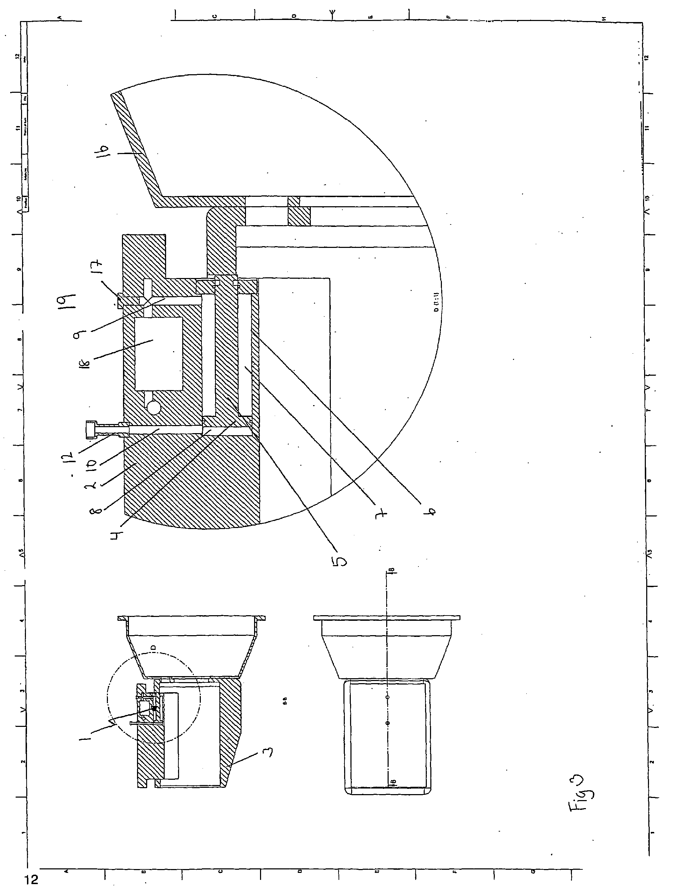

A second embodiment of the invention is illustrated in fig. 3. A first valve 18 is included in the shift-control unit 2. The first valve 18 may be mechanical or electrical or of any kind suitable for this kind of use. In accordance with this embodiment the pressurized fluid is provided by a source present in the vehicle for instance an air source used in the brake system of the vehicle. The first valve 18 controls the flow of pressurized fluid into the passage 9. The first valve 18 is opened to introduce pressurized fluid into the passage 9 and the first chamber 7. Thereafter the pressure in the first chamber 7 is regulated by the first valve 18 to retract the piston 4 and the piston rod in the bore 6 into the position as illustrated in fig 3. After the shift-control unit 2 have been installed or removed the flow of pressurized fluid is stopped using the first valve 18. A closure such as a plug 17 is inserted into the passage 9 during the inlet of pressurized fluid from the source. The plug 17 may be removed for venting out the first chamber 7, when the installation/removal of the shift-control unit 2 has been completed. Alternatively a second valve may be provided, controlling the communication between the first passage 9 and the atmosphere 19. The second valve may be opened venting out the first chamber 7, thereby bringing the piston 4 and the piston rod 5 into the initial operating position. Alternatively the system may be arranged with an exhaust chamber (not shown) providing for the pressurized fluid escaping from the first chamber 7. The first passage 9 may be provided with an exhaust cover.

## Claims

1. A system for mounting/demounting a cylinder unit (1) in a vehicle, wherein a piston rod (5) provided with a piston (4) is arranged in the bore (6) of the cylinder unit, which piston (4) and piston rod (5) are displaceably arranged in the axial direction of the bore (6) of the cylinder unit, the bore (6) has an opening (13) provided for an end portion of the piston rod (5) to protrude out from the bore (6), and the piston (4) separates the cylinder unit into a first chamber (7) and a second chamber (8), wherein at least a first passage (9) is provided for communication of fluid into or out of the first chamber (7), **characterized in that** in an initial operating position of the cylinder unit the piston (4) and the piston rod (5) is positioned with the end portion of the piston rod (5) protruding out from the mouth of the bore (6), in a mounting/demounting position of the cylinder unit pressurized fluid is introduced into the first chamber (7), preferably through the first passage (9), thereby placing the piston (4) and the piston rod (5) in a mounting/demounting position where the end portion of the piston rod (5) is essentially retracted in the bore (6).

2. System in accordance with claim 1, **characterized in that** the pressurized fluid is hydraulic or pneumatic.

3. System in accordance with claim 1 or 2, **characterized in that** the cylinder unit (1) is a slave cylinder, a clutch actuator or a gear actuator.

4. System in accordance with one of the preceding claims,
**characterized in that** the cylinder unit (1) is provided in a vehicle element, preferably a shift-control unit removably arranged in.a structure of the vehicle.

5. System in accordance with one of the preceding claims,
**characterized in that** the first passage (9) communicates with the atmosphere, preferably through a mouth of the first passage (9).

6. System in accordance with one of the preceding claims,
**characterized in that** the first passage (9) is provided with an exhaust cap.

7. System in accordance with one of the preceding claims,
**characterized in that** an exhaust chamber is provided for fluid to be vented out from the first chamber.

8. System in accordance with one of the preceding claims,
**characterized in that** the mouth of the first passage (9) is provided with a nipple (11).

9. System in accordance with one of the preceding claims,
**characterized in that** the pressurized fluid is provided by an external source connected to the first passage.

10. System in accordance with one of the preceding claims 1 to 8, **characterized in that** the pressurized fluid is provided by an existing source present in the vehicle, which-source is provided for connection to the first passage (9).

11. System in accordance with claim 9, **characterized in that** a first valve is provided to control the communication of fluid from the existing source to the first passage (9).

12. System in accordance with one of the preceding claims,
**characterized in that** a second valve is provided to control the communication of fluid between the first passage (9) and atmosphere.

13. System in accordance with claim 10, **characterized in that** a two-way valve is provided to control the communication of fluid from the first passage to atmosphere and to control the communication of fluid from the existing source to the first passage.

14. System in accordance with one of the preceding claims 11 to 13, **characterized in that** first valve is mechanically or electrically operated and/or second valve is mechanically or electrically operated.

15. Method for mounting/demounting a cylinder unit (1) provided in an element removably arranged in a vehicle, wherein a piston rod (5) is arranged in the bore (6) of the cylinder unit and that the piston rod (5) is provided with a piston (4) which is displaceably arranged in the bore (6) of the cylinder unit, which bore (6) has an opening (13) provided for an end portion of the piston rod (5) to protrude out from the bore (6), and which piston (4) separates the cylinder unit in a first chamber (7) and a second chamber (8) wherein at least a first passage (9) is provided for communication of fluid into or out of the first chamber (7), **characterized in that** the method comprises the steps of
a) connecting a source of pressurized fluid to the first passage (9) and introducing fluid into the first chamber (7),
b) regulating the pressure in the first chamber (7) to place the piston (4) and the piston rod (5) in a position where the end portion of the piston rod (5) is essentially retracted in the bore (6),
c) inserting/removing the element into/out of the vehicle,
d) disconnecting the pressure source.

16. Method according to claim 15, **characterized in that** the pressure source used is an external source of pressurized fluid.

17. Method for mounting/demounting in accordance with claim 16, **characterized by**
a) opening a second valve introducing fluid into the first chamber,
b) optionally using the second valve to regulate the pressure in the first chamber,
c) closing the second valve to stop the fluid entering the first chamber.

18. Method according to claim 15, **characterized in that** the pressure source used is a source of pressurized fluid provided in the vehicle.

19. Method for mouting/demounting in accordance with claim 18,
**characterized in that** in
a) opening a first valve to introduce fluid into the first chamber,
b) optionally using a second valve to regulate the pressure in the first chamber,
c) closing the first valve to stop the fluid from entering the first chamber.

20. Method for mounting/demounting in accordance with claim 18 or 19, **characterized in that** before a) closing a second valve to close off communication between atmosphere and first passage, wherein the method further comprises step
e) opening the second valve to bring the piston rod into an initial operating position.

## Patentansprüche

1. System zum Montieren, Demontieren einer Zylindereinheit
(1) in einem Fahrzeug, wobei eine mit einem Kolben (4) versehene Kolbenstange (5) in der Bohrung (6) der Zylindereinheit angeordnet ist, wobei der Kolben (4) und die Kolbenstange (5) in axialer Richtung der Bohrung (6) der Zylindereinheit verschiebbar angeordnet ist, wobei die Bohrung (6) eine für einen Endbereich der Kolbenstange (5) vorgesehene Öffnung (13) aufweist, damit diese aus der Bohrung (6) heraus vorsteht, und wobei der Koben (4) die Zylindereinheit in eine erste Kammer (7) und eine zweite Kammer (8) unterteilt, wobei wenigstens ein erster Durchgang (9) zum Durchfluss von Fluid in die oder aus der ersten Kammer (7) vorgesehen ist, **dadurch gekennzeichnet, dass** in einer anfänglichen Arbeitsstellung der Zylindereinheit der Kolben (4) und die Kolbenstange (5) mit dem Endbereich der Kolbenstange (5) aus der Mündung der Bohrung (6) herausragend positioniert ist, dass in einer Montage/Demontage-Stellung der Zylindereinheit unter Druck stehendes Fluid in die erste Kammer (7) eingeführt wird, vorzugsweise durch den ersten Durchgang (9), wodurch der Kolben (4) und die Kolbenstange (5) in eine Montage/Demontage-Stellung gebracht wird, in der der Endbereich der Kolbenstange (5) im Wesentlichen in die Bohrung (6) zurückgezogen ist.

2. System nach Anspruch 1, **dadurch gekennzeichnet, dass** das unter Druck stehende Fluid hydraulisch oder pneumatisch ist.

3. System nach Anspruch 1 oder 2, **dadurch gekennzeichnet, dass** die Zylindereinheit (1) ein Nemazylinder, ein Kupplungsbetätiger oder ein Gangschaltungsbetätiger ist.

4. System nach einem der vorhergehenden Ansprüche, **dadurch gekennzeichnet, dass** die Zylindereinheit (1) in einem Fahrzeugelement vorgesehen ist, vorzugsweise einer abnehmbar in einer Struktur des Fahrzeugs angeordneten Schaltungssteuereinheit.

5. System nach einem der vorhergehenden Ansprüche, **dadurch gekennzeichnet, dass** der erste Durchgang (9) in Verbindung mit der Atmosphäre steht, vorzugsweise durch eine Mündung des ersten Durchgangs (9).

6. System nach einem der vorhergehenden Ansprüche, **dadurch gekennzeichnet, dass** der erste Durchgang (9) mit einer Abgaskappe versehen ist.

7. System nach einem der vorhergehenden Ansprüche, **dadurch gekennzeichnet, dass** eine Abgaskammer für aus der ersten Kammer abzulassendes Fluid vorgesehen ist.

8. System nach einem der vorhergehenden Ansprüche, **dadurch gekennzeichnet, dass** die Mündung des ersten Durchgangs (9) mit einem Stutzen (11) versehen ist.

9. System nach einem der vorhergehenden Ansprüche, **dadurch gekennzeichnet, dass** das unter Druck stehende Fluid durch eine externe, mit dem ersten Durchgang verbundene Quelle bereitgestellt wird.

10. System nach einem der vorhergehenden Ansprüche 1 bis 8, **dadurch gekennzeichnet, dass** das unter Druck stehende Fluid durch eine in dem Fahrzeug vorhandene Quelle bereitgestellt wird, wobei die Quelle zur Verbindung mit dem ersten Durchgang (9) vorgesehen ist.

11. System nach Anspruch 9, **dadurch gekennzeichnet, dass** ein erstes Ventil zur Steuerung des Durchflusses von Fluid aus der vorhandenen Quelle zu dem ersten Durchgang (9) vorgesehen ist.

12. System nach einem der vorhergehenden Ansprüche, **dadurch gekennzeichnet, dass** ein zweites Ventil zum Steuern des Durchflusses von Fluid zwischen dem ersten Durchgang (9) und der Atmosphäre vorgesehen ist.

13. System nach Anspruch 10, **dadurch gekennzeichnet, dass** ein Zweiwegeventil zum Steuern des Durchflusses von Fluid aus dem ersten Durchgang in die Atmosphäre und zum Steuern des Durchflusses von Fluid aus der vorhandenen Quelle zu dem ersten Durchgang vorgesehen ist.

14. System nach einem der vorhergehenden Ansprüche 11 bis 13, **dadurch gekennzeichnet, dass** das erste Ventil mechanisch oder elektrisch betätigt und/oder das zweite Ventil mechanisch oder elektrisch betätigt wird.

15. Verfahren zum Montieren/Demontieren einer Zylindereinheit (1), die in einem entnehmbar in einem Fahrzeug angeordneten Element vorgesehen ist, wobei eine Kolbenstange (5) in der Bohrung (6) der Zylindereinheit angeordnet ist und die Kolbenstange (5) mit einem Kolben (4) versehen ist, der verschiebbar in der Bohrung (6) der Zylindereinheit angeordnet ist, wobei die Bohrung (6) eine für einen Endbereich der Kolbenstange (5) vorgesehene Öffnung (13) aufweist, damit diese aus der Bohrung (6) heraus vorstehen kann, und wobei der Kolben (4) die Zylindereinheit in eine erste Kammer (7) und eine zweite Kammer (8) auftrennt, wobei wenigstens ein erster Durchgang (9) zum Durchfluss von Fluid in die oder aus der ersten Kammer (7) vorgesehen ist, **dadurch gekennzeichnet, dass** das Verfahren die Schritte aufweist:
a) Anschließen einer Quelle für unter Druck stehendes Fluid an den ersten Durchgang (9) und Einführen von Fluid in die erste Kammer (7),
b) Regeln des Drucks in der ersten Kammer (7), um so den Kolben (4) und die Kolbenstange (5) in eine Stellung zu positionieren, in der der Endbereich der Kolbenstange (5) im Wesentlichen in die Bohrung (6) zurückgezogen ist,
c) Einsetzen/Entfernen des Elements in das/aus dem Fahrzeug,
d) Abtrennen der Druckquelle.

16. Verfahren nach Anspruch 15, **dadurch gekennzeichnet, dass** die verwendete Druckquelle eine externe Quelle für unter Druck stehendes Fluid ist.

17. Verfahren zum Montieren/Demontieren gemäß Anspruch 16, **gekennzeichnet durch**
a) Öffnen eines zweiten Ventils zur Einfuhr von Fluid in die erste Kammer,
b) optionales Verwenden des zweiten Ventils zum Regeln des Druckes in der ersten Kammer,
c) Schließen des zweiten Ventils, um den Eintritt von Fluid in die erste Kammer zu stoppen.

18. Verfahren nach Anspruch 15, **dadurch gekennzeichnet, dass** die verwendete Druckquelle eine in dem Fahrzeug vorgesehene Quelle für unter Druck stehendes Fluid ist.

19. Verfahren zum Montieren/Demontieren gemäß Anspruch 18, **gekennzeichnet durch**
a) Öffnen eines ersten Ventils zum Einführen von Fluid in die erste Kammer,
b) optionales Verwenden eines zweiten Ventils zum Regeln des Druckes in der ersten Kammer,
c) Schließen des ersten Ventils, um den Eintritt des Fluids in die erste Kammer zu stoppen.

20. Verfahren zum Montieren/Demontieren gemäß Anspruch 18 oder 19, **dadurch gekennzeichnet, dass** vor a) ein zweites Ventil geschlossen wird, um den Durchfluss zwischen Atmosphäre und dem ersten Durchgang zu blockieren, wobei das Verfahren weiterhin den Schritt aufweist:
e) Öffnen des zweiten Ventils, um den Kolben in eine anfängliche Betriebsstellung zu bringen.

## Revendications

1. Système permettant de monter/démonter une unité de cylindre
(1) dans un véhicule, dans lequel une tige de piston (5) munie d'un piston (4), est disposée dans l'alésage (6) de l'unité de cylindre, le piston (4) et la tige de piston (5) étant disposés de manière mobile dans la direction axiale de l'alésage (6) de l'unité de cylindre, l'alésage (6) comprend une ouverture (13) réalisée pour qu'une portion d'extrémité de la tige de piston de la tige de piston (5) dépasse hors de l'alésage (6), et le piston (4) divise l'unité de cylindre en une première chambre (7) et une seconde chambre (8), dans lesquelles un premier passage (9) est prévu pour la communication fluidique vers et hors de la première chambre (7), **caractérisé en ce que**, dans une position de fonctionnement initiale de l'unité de cylindre, le piston (4) et la tige de piston (5) sont positionnés avec la portion d'extrémité de la tige de piston (5) dépassant hors de l'embouchure de l'alésage (6), dans une position de montage/démontage de l'unité de cylindre, du fluide pressurisé est introduit dans la première chambre (7), de préférence à travers le premier passage (9), plaçant ainsi le piston (4) et la tige de piston (5) dans une position de montage/démontage dans laquelle la portion d'extrémité de la tige de piston (5) est essentiellement rétractée dans l'alésage (6).

2. Système selon la revendication 1, **caractérisé en ce que** le fluide pressurisé est hydraulique ou pneumatique.

3. Système selon la revendication 1 ou 2, **caractérisé en ce que** l'unité de cylindre (1) est un cylindre esclave, un actionneur d'embrayage ou un actionneur d'engrenage.

4. Système selon l'une des revendications précédentes, **caractérisé en ce que** l'unité de cylindre (1) est disposée dans un élément de véhicule, de préférence une unité de changement de vitesses disposée de manière amovible dans la structure du véhicule.

5. Système selon l'une des revendications précédentes, **caractérisé en ce que** le premier passage (9) communique avec l'atmosphère, de préférence à travers une embouchure du premier passage (9).

6. Système selon l'une des revendications précédentes, **caractérisé en ce que** le premier passage (9) est muni d'un capuchon d'échappement.

7. Système selon l'une des revendications précédentes, **caractérisé en ce qu'**une chambre d'échappement est prévue pour l'évacuation du fluide hors de la première chambre.

8. Système selon l'une des revendications précédentes, **caractérisé en ce que** l'embouchure du premier passage (9) est munie d'un téton (11).

9. Système selon l'une des revendications précédentes, **caractérisé en ce que** le fluide pressurisé est fourni par une source externe connectée au premier passage.

10. Système selon l'une des revendications précédentes 1 à 8, **caractérisé en ce que** le fluide pressurisé est fourni par une source existante présente dans le véhicule, cette source étant destinée à être connectée au premier passage (9).

11. Système selon la revendication 9, **caractérisé en ce qu'**une première vanne est prévue pour contrôler la communication fluidique entre la source existante et le premier passage (9).

12. Système selon l'une des revendications précédentes, **caractérisé en ce qu'**une seconde vanne est prévue pour contrôler la communication fluidique entre le premier passage (9) et l'atmosphère.

13. Système selon la revendication 9, **caractérisé en ce qu'**une vanne à deux voies est prévue pour le contrôle de la communication fluidique entre le premier passage et l'atmosphère et pour le contrôle de la communication fluidique entre la source existante et le premier passage.

14. Système selon l'une des revendications précédentes 11 à 13, **caractérisé en ce qu'**une première vanne est actionnée mécaniquement ou électriquement et/ou une seconde vanne est actionnée mécaniquement ou électriquement.

15. Procédé de montage/démontage d'une unité de cylindre (1) prévue dans un élément disposé de manière amovible dans un véhicule, dans lequel une tige de piston (5) est disposée dans l'alésage (6) de l'unité de cylindre et en ce que la tige de piston (5) est munie d'un piston (4) disposé de manière amovible dans l'alésage (6) de l'unité de cylindre, cet alésage (6) comprenant une ouverture (13) prévue pour qu'une portion d'extrémité de la tige de piston (5) dépasse hors de l'alésage (6) et le piston (4) divise l'unité de cylindre en une première chambre (7) et une seconde chambre (8) dans lesquelles au moins un premier passage (9) est prévu pour la communication fluidique vers et hors de la première chambre (7), **caractérisé en ce que** le procédé comprend les étapes suivantes :
a) connexion d'une source de fluide pressurisé au premier passage (9) et introduction du fluide dans la première chambre (7),
b) régulation de la pression dans la première chambre (7) afin de placer le piston (4) et la tige de piston (5) dans une position dans laquelle la portion d'extrémité de la tige de piston (5) est essentiellement rétractée dans l'alésage (6),
c) insertion/retrait de l'élément dans/hors du véhicule,
d) déconnexion de la source de pression.

16. Procédé selon la revendication 15, **caractérisé en ce que** la source de pression utilisée est une source externe de fluide pressurisé.

17. Procédé de montage/démontage selon la revendication 16,
**caractérisé par** :
a) l'ouverture d'une seconde vanne pour introduire le fluide dans la première chambre,
b) l'utilisation optionnelle de la seconde vanne pour réguler la pression dans la première chambre,
c) la fermeture de la seconde vanne pour stopper le fluide entrant dans la première chambre.

18. Procédé selon la revendication 15, **caractérisé en ce que** la source de pression utilisée est une source de fluide pressurisé prévue dans le véhicule.

19. Procédé de montage/démontage selon la revendication 18,
**caractérisé par** :
a) l'ouverture d'une première vanne pour introduire le fluide dans la première chambre,
b) l'utilisation optionnelle d'une seconde vanne pour réguler la pression dans la première chambre,
c) la fermeture de la première vanne pour stopper le fluide entrant dans la première chambre.

20. Procédé de montage/démontage selon la revendication 18, **caractérisé en ce que** avant l'étape a) fermeture d'une seconde vanne pour stopper la communication entre l'atmosphère et le premier passage, le procédé comprend en outre l'étape e) ouverture de la second vanne pour amener la tige de piston dans une position initiale de fonctionnement.
